# FASCICULE DE BREVET EUROPEEN

(11) **EP 1 545 278 B1**
(45) Date de publication et mention de la délivrance du brevet: **07.11.2007**
(21) Numéro de dépôt: 03780267.5
(22) Date de dépôt: 12.09.2003
(51) Int. Cl.: A47J 31/46, A47J 31/40

(54) **MACHINE POUR LA PRODUCTION DE BOISSON PAR INFUSION D'EAU CHAUDE**
GERÄT FÜR DIE HERSTELLUNG VON GETRÄNKEN DURCH AUFBRÜHEN VON HEISSEM WASSER
MACHINE FOR PRODUCING A BEVERAGE BY HOT WATER INFUSION

(30) Priorité: 16.09.2002 FR 0211665
(43) Date de publication de la demande: 29.06.2005
(73) Titulaire: COMPAGNIE MEDITERRANEENNE DES CAFES S.A., 06510 Carros (FR)
(72) Inventeur: BLANC, Jean-Pierre, Off. Medit. de Brev. d'I.&M., 06000 Nice (FR); FERRIER, Christian, Off. Medit. de Brev. d'I.&M., 06000 Nice (FR)
(74) Mandataire: Decobert, Jean-Pascal
(86) Numéro de dépôt international: PCT/FR2003/050054
(87) Numéro de publication internationale: WO 2004/041039

(56) Documents cités:
- EP-A- 1 106 126
- EP-A- 1 219 217
- DE-A- 4 427 745

## Description

La présente invention concerne une machine pour la production de boissons par infusion d'eau chaude.

Elle s'appliquera particulièrement à la réalisation de machines pour la fabrication de cafés de type expresso.

De telles machines comprennent une chambre d'infusion apte à recevoir la matière à infuser telle de la mouture de café. Cette chambre est reliée à un circuit de distribution d'eau chaude permettant son injection dans la chambre d'infusion et l'évacuation de la boisson par une sortie. Dans certaines machines, la chambre d'infusion peut être ouverte ou fermée suivant les phases de production et, en particulier l'admission de la mouture, l'infusion et l'éjection de la mouture. De telles machines à chambre d'infusion aptes à être ouvertes ou fermées, sont particulièrement utilisées dans le domaine des machines utilisant des doses de mouture de café préemballées. Des doses du type présentées dans le document EP-A-0 717 603 peuvent en particulier être utilisées sans que cet exemple soit limitatif.

Les phase d'ouverture et de fermeture de la chambre d'infusion servent dans cette application préférée à admettre la dose, à fermer la chambre d'infusion pour extraction et à l'ouvrir enfin pour éjecter la dose usagée.

Ce type de machine nécessite un circuit d'eau chaude pour l'injection dans la chambre d'infusion, et éventuellement la livraison additionnelle d'eau chaude ou de vapeur d'eau à l'usager par une buse supplémentaire. En outre, des moyens de fermeture sont à prévoir pour ouvrir ou fermer la chambre d'infusion. Ces moyens utilisent généralement un circuit hydraulique de commande, et présentent un vérin dont le piston est apte à translater pour les phases de fermeture et d'ouverture de la chambre d'infusion.

Il ressort que plusieurs circuits hydrauliques sont présents ce qui induit une multiplicité de vannes et en particulier des électrovannes.

Le document WO-A-02 058523 présente un appareil illustrant ces inconvénients. En particulier, deux électrovannes y sont nécessaires pour commander le verrouillage de la chambre d'infusion et la configuration du circuit d'eau (entre une voie d'injection dans la chambre d'infusion et une voie de récupération en position de repos. Dans cette antériorité, deux électrovannes sont donc indispensables ce qui multiplie les coûts, les contraintes quant à la présence de moyens électriques de commande et leur automatisation, et ce alors que cette machine ne comporte aucune sortie de vapeur ou d'eau chaude qui nécessiterait encore une électrovanne supplémentaire.

On connaît de DE-4427745 A1 une vanne apte à commander un circuit de distribution d'eau chaude. Ce document montre l'emploi d'une vanne à disques pour faire sélectivement circuler de l'eau chaude vers une mouture de café ou vers une buse vapeur.

EP 1 106 126 A1 divulgue un dispositif sensiblement équivalent muni en outre d'un vérin de tassage de la mouture de café.

Ces deux documents montrent uniquement la gestion d'un circuit classique d'eau chaude.

Il existe donc un besoin de rationaliser la configuration des circuits hydrauliques dans des machines à café en vue de limiter le nombre de vannes nécessaires à la réalisation des différentes configurations de circuit au cours du fonctionnement.

La présente invention s'inscrit dans ce cadre, et propose pour ce faire une machine améliorée pour la production de boissons, par infusion d'eau chaude comprenant une chambre d'infusion reliée à un circuit de distribution d'eau chaude et apte à être ouverte ou fermée par des moyens de fermeture reliés à un circuit hydraulique de commande. Le circuit de distribution d'eau chaude et le circuit hydraulique de commande sont configurés par la même vanne.

Cette machine pourra se présenter suivant des variantes préférées introduites ci-après :
- les moyens de fermeture comportent un vérin hydraulique actionné par une pompe hydraulique ;
- la vanne comporte des voies de connection au circuit de distribution d'eau chaude, à une sortie de décharge d'eau chaude, à la sortie de la pompe hydraulique, au vérin hydraulique et à un circuit de purge du vérin;
la vanne comporte des moyens de mise en communication de la voie de connection au circuit de distribution d'eau chaude à la voie de connection de la sortie de décharge d'eau chaude, et des moyens de mise en communication de la voie de connection du vérin hydraulique soit à la voie de connection de la sortie de la pompe hydraulique soit à la voie de connection du drcuit de purge du vérin.

La vanne comporte une voie de connection d'une sortie d'eau chaude, et des moyens de mise en communication de la voie de connection du circuit de distribution d'eau chaude soit à la voie de connection de la sortie de décharge d'eau chaude, soit à la voie de connection de la sortie d'eau chaude.

La vanne comporte une partie fixe dotée des voies de connection et une partie mobile dotée des moyens de mise en communication, la position relative de la partie fixe et de la partie mobile définissant la configuration du circuit de distribution d'eau chaude et du circuit hydraulique de commande.

La partie mobile est mobile en rotation relativement à la partie fixe.

La partie mobile est actionnée en rotation par un levier.

La pompe hydraulique est commune au circuit hydraulique de commande et au circuit de distribution d'eau chaude.

La circuit de distribution d'eau chaude et le circuit hydraulique de commande sont alimentés par une même source d'eau.

Le circuit de purge du vérin est relié à la source d'eau.

Le circuit de distribution d'eau chaude comporte une chaudière reliée à un circuit d'injection dans la chambre d'infusion, ledit circuit d'injection comportant un clapet taré à une pression prédéterminée.

Les dessins ci-joints sont donnés à titre d'exemples et ne sont pas limitatifs de l'invention. Ils représentent seulement un mode de réalisation de l'invention et permettront de la comprendre aisément.
La figure 1 montre un schéma de certains composants d'une machine de l'invention et des circuits d'eau chaude et hydraulique qui sont présentés dans une position d'arrêt de la machine.
La figure 2 montre ce même schéma mais dans une position d'extraction pour la production de la boisson chaude.
La figure 3 montre une autre configuration du circuit pour la livraison d'eau chaude par une sortie d'eau chaude ou de vapeur.
La figure 4 montre un exemple de réalisation d'une partie mobile d'une vanne utilisable selon l'invention en vue de dessus.
La figure 5 en est une vue en coupe.
La figure 6 montre un mode préféré de réalisation d'une partie fixe d'une vanne utilisable selon l'invention en vue de dessus.
La figure 7 en est une vue en coupe et la figure 8 est en une vue dessous.
La figure 9 est une vue éclatée illustrant différents composants d'une vanne utilisable selon l'invention.
Les figures 10 à 12 schématisent trois positions de fonctionnement possibles pour la chambre d'infusion.

La machine de production de boissons selon l'invention comprend une chambre d'infusion apte à être ouverte et fermée par des moyens de fermeture.

A titre préféré, cela est réalisé par l'intermédiaire d'une chambre 1 constituée en deux portions, l'une fixe 2, et l'autre mobile 3, bien que cet exemple ne soit pas limitatif. La portion mobile 3 est en particulier apte à être rapprochée ou éloignée de la portion fixe par l'intermédiaire d'un actionnement en translation réalisé par les moyens de fermeture. Toujours à titre préféré, ces moyens de fermeture sont constitués d'un vérin hydraulique 4 dont le piston 5 réalise l'actionnement en translation de la portion mobile 3 de la chambre d'infusion 1.

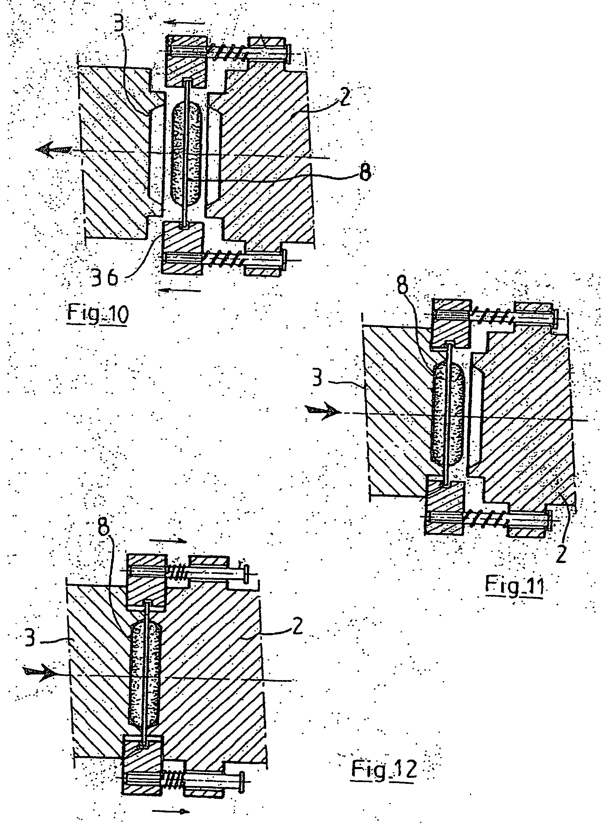

Les figures 10 à 12 illustrent à titre purement indicatif des phase de fonctionnement de l'invention pour une machine utilisant des doses 8.

A titre additionnel, des moyens de guidage d'une portion latérale de la dose 8 peuvent être prévus au niveau de la chambre d'infusion 1 tel que cela est représenté au repère 36 sur la figures 10 à 12.

Le vérin hydraulique est relié à un circuit hydraulique de commande 10 qui peut être configuré pour autoriser l'admission de fluides dans le corps du vérin ou son évacuation suivant les phases de fonctionnement. La mise en pression du fluide (ici constitué par de l'eau) est réalisée par une pompe hydraulique 12 avantageusement commune avec la pompe utilisée pour l'injection d'eau chaude dans la chambre d'infusion.

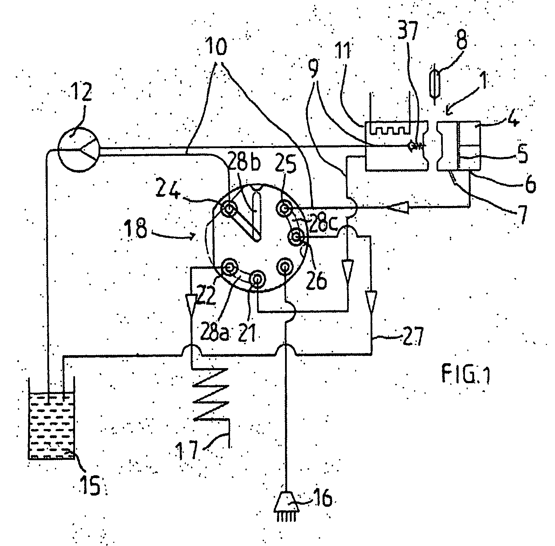

La pompe 12 est alimentée en eau par une source sous forme d'un bac représenté par le repère 15 aux figures 1 à 3. En aval de la pompe 12, une chaudière 11 est présente pour assurer l'amenée en température de l'eau avant l'injection dans la chambre d'infusion 1.

En position de repos, l'eau n'est pas admise dans la chambre d'infusion, et un éventuel surplus doit être déchargé par l'intermédiaire d'une sortie de décharge 17 qui peut déboucher sur un bac de récupération.

En outre, une sortie d'eau chaude 16 peut également être prévue pour assurer la livraison d'eau chaude à l'utilisateur ou la production de vapeur suivant l'état d'actionnement et d'activation de la pompe.

Ces différents éléments constitutifs de machines, sont reliés par un circuit de distribution d'eau chaude (pour la partie liée à la production de boissons, la livraison d'eau chaude, et la production de vapeur), et par un circuit hydraulique de commande (pour l'actionnement des moyens de fermeture). De façon caractéristique, la configuration de ces deux circuits est assurée par une même vanne.

Cette vanne 18 est représentée dans différents états aux figures 1 à 3.

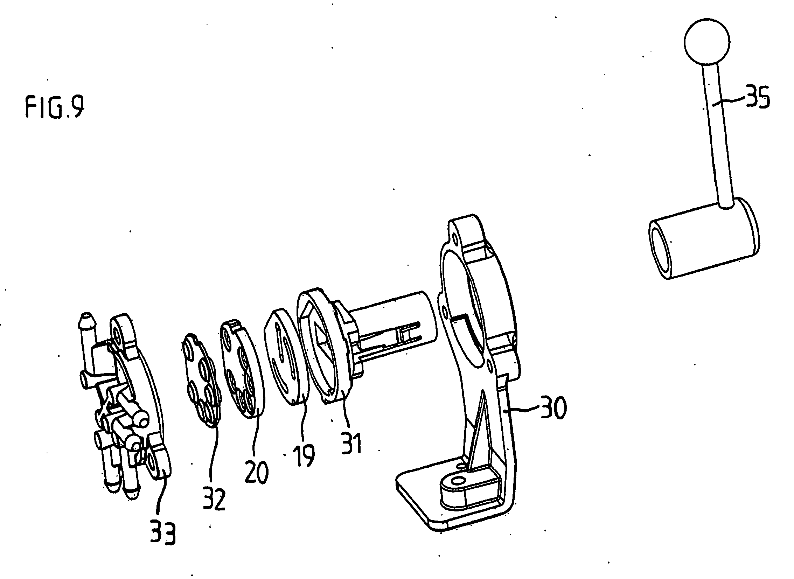

Comme cela ressort des figures 1 à 3 et des figures 6 à 8, la vanne 18 comporte une pluralité de voies de connection aux éléments des circuits.

En particulier, en ce qui concerne le circuit hydraulique de commande 10, la vanne 18 comporte une voie de connection 25 au vérin hydraulique 4 ainsi qu'une voie de connection 26 a un circuit de purge 27. En outre, une voie de connection 24 est prévue pour relier la vanne 18 à une sortie 13 de la pompe 12 afin d'admettre de l'eau sous pression pour la commande du vérin hydraulique 4.

En ce qui concerne le circuit de distribution d'eau chaude 9, la vanne 18 comporte une voie de connection 21 à ce circuit, en provenance de la chaudière 11. Le circuit 9 peut être mis en connection par l'intermédiaire de la vanne 18 avec une sortie de décharge 17 par l'intermédiaire d'une voie de connection 22.

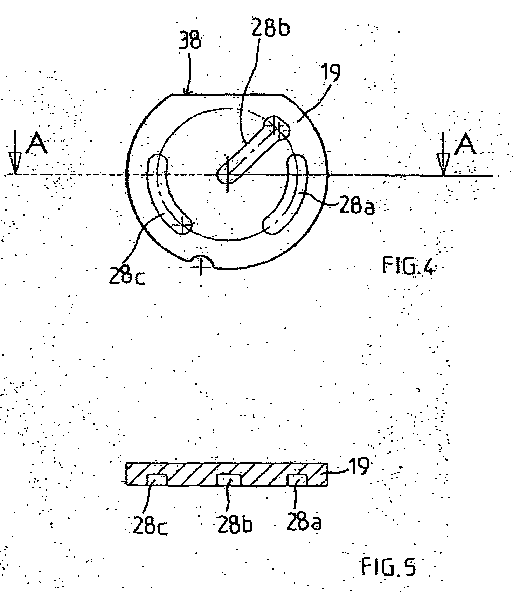

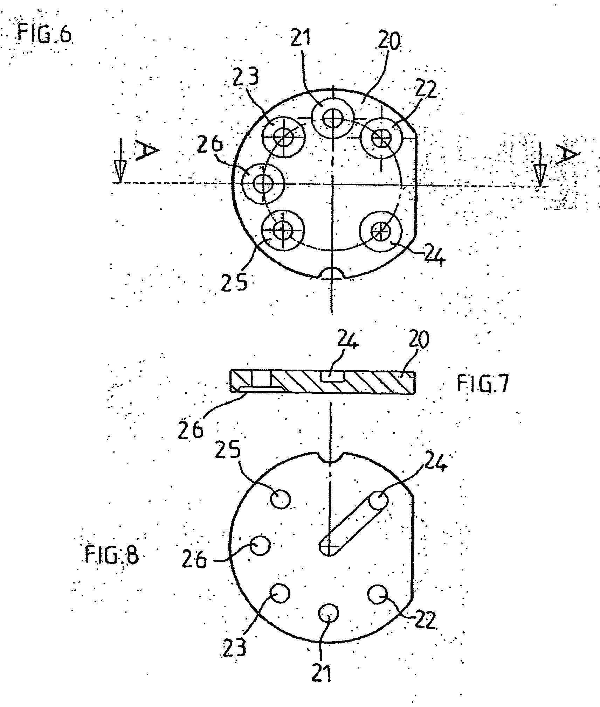

A titre préféré, la vanne 18 est constituée à partir de deux parties 19, 20, bien représentées respectivement aux figures 4, 5, et 6 à 8. La partie 20 est fixe et reçoit les différentes voies de connection précédemment indiquées sous forme de trous débouchants. La partie 19 est montée mobile en rotation pour assurer plusieurs configuration de circuit suivant la position angulaire relative qu'elle occupe par rapport à la partie fixe 20.La mise ne communication de différentes voies de connection 21 à 26, présentent sur la partie fixe 20, s'effectue par des moyens de mise en communication ici sous la forme de trous borgnes oblongs 28 a, b, c, qui ressortent particulièrement des figures 4 et 5. Le trou oblong 28 c assure une mise en communication des voies de connection 25, 26, ou 26 et 23, selon les position relatives de la partie mobile 19 et de la partie fixe 20. Le trou oblong 28 b assure la mise en communication de la voie de connection 24 (issue de la pompe 12) et de la voie de connection 25 (vers le vérin hydraulique 4).

Enfin, le trou oblong 28 a permet la mise en communication de la voie de connection 21 et de la voie de connection 22 pour ouvrir le circuit de décharge 17 ou de la voie 21 avec la voie 23 pour produire de l'eau chaude ou de la vapeur. La commande de communication de la vanne 18 peut être opérée de différentes façon, et notamment par une actionnement motorisé ou, plus simplement, par l'intermédiaire d'un levier 35 actionnable manuellement dont un exemple est représentée en figure 9. A cette figure on a également illustré un exemple de montage de la vanne 18. Dans ce cadre, la partie fixe 20 est rapportée sur un carter 33 de raccordement des voies de connections 21 à 26. L'étanchéité est assurée par un joint 32 par exemple en silicone.

Sur la phase de travail de la partie fixe 20 s'applique la face de travail (celle qui comporte les trous oblongs 28a, b, c) de la partie mobile 19. Un plat 38 réalisé sur le pourtour de la partie mobile 19 ici sous forme de portion de disque tout comme la partie fixe 20, assure l'entraînement en rotation sous l'effet du levier 35. La transmission de puissance entre le levier 35 et la partie mobile 19 est opérée par un coupleur 31 permettant également le montage de l'ensemble sur un support 30.

On notera que cette configuration a l'avantage de ne nécessiter aucune commande électrique pour assurer le choix des configurations de fonctionnement de la vanne 18.

On expose ci-après plus précisément le mode de fonctionnement de la machine selon l'invention, suivant trois positions successives de la vanne 18.

### POSITION ARRET

Cette configuration est illustrée en figure 1. Dans ce cadre, la machine n'est pas en position de production, en particulier, une dosette 8 est ici en cours d'introduction mais n'est pas encore dans la chambre d'infusion 1. Les moyens de fermeture de la chambre d'infusion 1 sont inactivés ce qui est représenté par une position de retrait du piston 5 du vérin 4. La pompe 12 est également inactive, et la vanne est telle que les voies de connection 24 et 25 ne sont pas reliées, évitant l'actionnement du vérin 4. Par contre, la voie 24 est en communication avec la voie de connection 26 assurant le circuit de purge 27 du vérin hydraulique 4 par retour à la source d'eau 15.

En ce qui concerne le circuit de distribution d'eau chaude 9, la chaudière 11 et la sortie de décharge 17 sont en communication afin d'éviter toute surpression dans la chaudière 11, par l'intermédiaire d'une mise en communication des voies de connection 21 et 22, par le trou oblong 28 a.

### POSITION PRODUCTION DE BOISSON

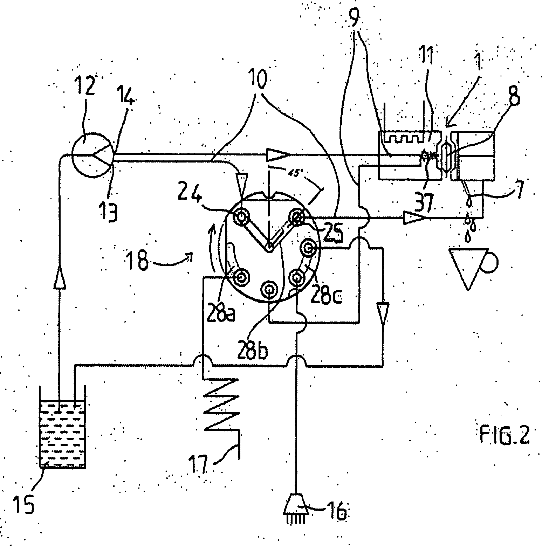

Dans ce cadre, une dose 8 a été introduite et est présente dans la chambre d'infusion 1. La partie mobile 19 de la vanne 18 a été tournée dans le sens indiqué par la flèche en figure 2. Cette rotation assure par l'intermédiaire du trou oblong 28 b, la mise en communication des voies de connection 24 et 25, de façon à alimenter le vérin hydraulique 4 en eau sous pression issue de la pompe 12. Cette alimentation de l'entrée 6 du vérin a pour effet de provoquer la translation du piston 5 qui assure la fermeture de la chambre d'infusion 1 par le mouvement de la portion mobile 3 de ladite chambre 1.

Durant cette phase d'actionnement du vérin 4, et bien que la pompe 12 soit activée, le passage d'eau chaude dans la chambre d'infusion n'est pas encore produite. En effet, un clapet 37 taré à une pression prédéterminée est situé en sortie de la chaudière 11, en amont de la chambre d'infusion 1, évite la circulation d'eau vers la chambre d'infusion 1 avant d'avoir atteint une pression prédéterminée choisie pour que la clapet ne s'ouvre pas avant la fermeture de la chambre d'infusion sous l'actionnement du vérin 4.

Dès que la pression prédéterminée est atteinte, le clapet 37 s'ouvre et assure la circulation d'eau entre la chaudière 11 et la chambre d'infusion 1 pour produire la boisson chaude qui s'écoule par l'intermédiaire de la sortie 7.

Durant cette phase de fonctionnement, les voies de connection 21, 22, et 23, ne sont pas reliées à la sortie de la chaudière 11.

### POSITION PRODUCTION D'EAU CHAUDE OU DE VAPEUR

A titre avantageux mais non limitatif, la machine selon l'invention est équipée d'une sortie 16 de livraison d'eau chaude ou de vapeur à l'utilisateur. La livraison d'eau chaude s'effectue avec un actionnement complet de la pompe 12. Pour la production de vapeur, la pompe 12 est inactive ou active par intermittence.

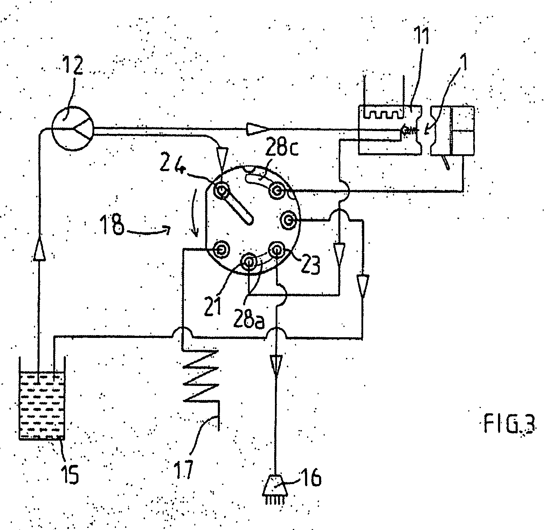

Cette phase de réalisation est illustrée à la figure 3. Elle s'obtient par rotation de la partie mobile 19 de la vanne 18 dans le sens trigonométrique depuis la position d'arrêt représentée à la figure 1 et exposée précédemment.

En référence à la figure 3, la vanne 18 est ici configurée de façon à mettre en communication les voies de connection 21 et 23 assurant l'écoulement de l'eau chaude depuis la chaudière 11 jusqu'à la sortie 16. Par contre, les autres voies ne sont pas en communication. En particulier, le vérin 4 reste inactif puisque la voie de connection 24 est bouchée. Dans ce cadre, la chambre d'infusion 1 reste ouverte et en attente de l'introduction d'une dose 8.

Dès que l'utilisateur souhaite stopper l'apport d'eau chaude ou de vapeur, il lui suffit de tourner le levier 35 dans le sens inverse pour remettre la vanne 18 en position d'arrêt représentée à la figure 1.

### REFERENCES

1. Chambre d'infusion
2. Portion fixe
3. Portion mobile
4. Vérin
5. Piston
6. Entrée de fluide
7. Sortie de boisson
8. dose
9. Circuit de distribution d'eau chaude
10. Circuit hydraulique de commande
11. Chaudière
12. Pompe hydraulique
13. Sortie de pompe
14. Sortie de pompe
15. Source d'eau
16. Sortie d'eau chaude
17. Sortie de décharge
18. Vanne
19. Partie mobile
20. Partie fixe
21. Voie de connection au circuit de distribution
22. Voie de connection à la sortie de décharge
23. Voie de connection à la sortie d'eau chaude
24. Voie de connection à la sortie de la pompe hydraulique
25. Voie de connection au vérin hydraulique
26. Voie de connection au circuit de purge
27. Circuit de purge
28 a, b, c - Trou borgne oblong
30. Support
31. Coupleur
32. Joint
33. Carter de raccordement
35. Levier
36. Moyen de guidage
37. Clapet taré
38. Plat

## Revendications

1. Machine pour la production de boissons par infusion d'eau chaude comprenant une chambre d'infusion (1) reliée à un circuit de distribution d'eau chaude (9) configuré par une vanne (18) comportant des voies de connection (22, 23) au circuit de distribution d'eau chaude (9) et à une sortie de décharge (17) d'eau chaude et comportant des moyens de mise en communication de la voie de connection (21) au circuit de distribution d'eau chaude (9) à la voie de connection (22) de la sortie de décharge (17) d'eau chaude, la vanne (18) comportant une partie fixe (20) dotée des voies de connection (21, 22) et une partie mobile (19) en rotation relativement à la partie fixe (20) et dotée des moyens de mise en communication, la position relative de la partie fixe (20) et de la partie mobile (19) définissant la configuration du circuit de distribution d'eau chaude (9),
**caractérisée par le fait que**
- la chambre d'infusion est apte à être ouverte ou fermée par des moyens de fermeture reliés à un circuit hydraulique de commande (10), dans laquelle le circuit de distribution d'eau chaude (9) et le circuit hydraulique de commande (10) sont configurés par la même vanne (18),
- les moyens de fermeture comportent un vérin hydraulique (4) actionné par une pompe hydraulique (12) ;
- la vanne (18) comporte des voies de connection (24, 25, 26) à la sortie (13) de la pompe hydraulique (12), au vérin hydraulique (4) et à un circuit de purge du vérin (27) ;
- la vanne (18) comporte des moyens de mise en communication de la voie de connection (25) du vérin hydraulique (4) soit à la voie de connection (24) de la sortie de la pompe hydraulique (12) soit à la voie de connection (26) du circuit de purge (27) du vérin (4).

2. Machine selon la revendication 1,
**caractérisée par le fait que**
la vanne (18) comporte une voie de connection (23) d'une sortie d'eau chaude (16), et des moyens de mise en communication de la voie de connection (21) du circuit de distribution d'eau chaude (9) soit à la voie de connection (22) de la sortie de décharge d'eau chaude (17), soit à la voie de connection (23) de la sortie d'eau chaude (16).

3. Machine selon la revendication 1 ou 2,
**caractérisée par le fait que**
la partie mobile (19) est actionnée en rotation par un levier (35).

4. Machine selon l'une quelconque des revendications 1 à 3,
**caractérisée par le fait que**
la pompe hydraulique (12) est commune au circuit hydraulique de commande (10) et au circuit de distribution d'eau chaude (9).

5. Machine selon l'une quelconque des revendications 1 à 4,
**caractérisée par le fait que**
le circuit de distribution d'eau chaude (9) et le circuit hydraulique de commande (10) sont alimentés par une même source d'eau (15).

6. Machine selon l'une quelconque des revendications 2 à 4 en combinaison avec la revendication 5,
**caractérisée par le fait que**
le circuit de purge (27) du vérin (4) est relié à la source d'eau (15).

7. Machine selon l'une quelconque des revendications 1 à 6,
**caractérisée par le fait que**
le circuit de distribution d'eau chaude (9) comporte une chaudière (11) reliée à un circuit d'injection dans la chambre d'infusion (1), ledit circuit d'injection comportant un clapet (37) taré à une pression prédéterminée.

## Claims

1. Machine for the production of beverages by infusion of hot water comprising an infusion chamber (1) connected to a hot water distribution circuit (9) configured by a valve (18) comprising connecting channels (22, 23) to the hot water distribution circuit (9) and to a hot water discharge outlet (17) and comprising means for bringing the connecting channel (21) to the hot water distribution circuit (9) into communication with the connecting channel (22) of the hot water discharge outlet (17), the valve (18) comprising a fixed portion (20) equipped with the connecting channels (21, 22) and a portion (19) which is mobile in rotation relative to the fixed portion (20) and equipped with the communicating means, the relative position of the fixed portion (20) and the mobile portion (19) defining the configuration of the hot water distribution circuit (9),
**characterised in that**
- the infusion chamber is capable of being opened or closed by closing means connected to a hydraulic control circuit (10), in which the hot water distribution circuit (9) and the hydraulic control circuit (10) are configured by the same valve (18);
- the closing means comprise a hydraulic jack (4) actuated by a hydraulic pump (12);
- the valve (18) comprises connecting channels (24, 25, 26) to the outlet (13) of the hydraulic pump (12), to the hydraulic jack (4) and to a jack purging circuit (27);
- the valve (18) comprises means for bringing the connecting channel (25) of the hydraulic jack (4) into communication with either the connecting channel (24) of the outlet of the hydraulic pump (12) or with the connecting channel (26) of the purging circuit (27) of the jack (4).

2. Machine according to claim 1,
**characterised in that**
the valve (18) comprises a connecting channel (23) of an outlet for hot water (16), and means for bringing the connecting channel (21) of the hot water distribution circuit (9) into communication either with the connecting channel (22) of the hot water discharge outlet (17) or with the connecting channel (23) of the hot water outlet (16).

3. Machine according to claim 1 or 2,
**characterised in that**
the mobile portion (19) is actuated in rotation by a lever (35).

4. Machine according to any one of claims 1 to 3,
**characterised in that**
the hydraulic pump (12) is common to the hydraulic control circuit (10) and to the hot water distribution circuit (9).

5. Machine according to any one of claims 1 to 4,
**characterised in that**
the hot water distribution circuit (9) and the hydraulic control circuit (10) are supplied by one and the same source of water (15).

6. Machine according to any one of claims 2 to 4 in combination with claim 5,
**characterised in that**
the purging circuit (27) of the jack (4) is connected to the source of water (15).

7. Machine according to any one of claims 1 to 6,
**characterised in that**
the hot water distribution circuit (9) comprises a boiler (11) connected to an injection circuit into the infusion chamber (1), said injection circuit comprising a valve (37) calibrated at a predetermined pressure.

## Patentansprüche

1. Vorrichtung für die Herstellung von Getränken durch Aufgießen von warmem Wasser, mit einer Aufgusskammer (1), die mit einem Warmwasser-Verteilerkreis (9) verbunden ist, der aufgebaut ist aus einem Ventil (18) mit Verbindungswegen (21, 22) zum Warmwasser-Verteilerkreis (9) und zu einem Warmwasser-Ausgabeausgang (17) sowie mit einer Verbindungseinrichtung des Verbindungsweges (21) mit dem Warmwasser-Verteilerkreis (9) mit dem Verbindungsweg (22) des Warmwasser-Ausgabeausgangs (17), wobei das Ventil (18) einen festen Teil (20), der mit den Verbindungswegen (21, 22) ausgestattet ist, und einen beweglichen Teil (19), der relativ zum festen Teil (20) eine Drehung ausführt und mit der Verbindungseinrichtung ausgestattet ist, aufweist, wobei die Relativstellung des festen Teils (20) und des beweglichen Teils (19) die Konfiguration des Warmwasser-Verteilerkreises (9) definiert,
**dadurch gekennzeichnet, dass**
- die Aufgusskammer geöffnet oder geschlossen werden kann durch eine Schließeinrichtung, die mit einer hydraulischen Antriebsschaltung (10) verbunden ist, wobei der Warmwasser-Verteilerkreis (9) und die hydraulische Antriebsschaltung (10) durch dasselbe Ventil (10) gebildet sind;
- die Schließeinrichtung einen Hydraulikzylinder (4) aufweist, der durch eine Hydraulikpumpe (12) betätigt wird;
- das Ventil (18) Verbindungswege (24, 25, 26) mit dem Ausgang (13) der Hydraulikpumpe (12), mit dem Hydraulikzylinder (4) und mit einem Zylinderentleerungskreis (27) aufweist;
- das Ventil (18) eine Verbindungseinrichtung des Verbindungsweges (25) des Hydraulikzylinders (4) entweder mit dem Verbindungsweg (24) des Ausgangs der Hydraulikpumpe (12) oder mit dem Verbindungsweg (26) des Entleerungskreises (27) des Zylinders (4) aufweist.

2. Vorrichtung nach Anspruch 1,
**dadurch gekennzeichnet,**
**dass** das Ventil (18) einen Verbindungsweg (23) eines Warmwasserausgangs (16) und eine Verbindungseinrichtung des Verbindungsweges (21) des Warmwasser-Verteilerkreises (9) entweder mit dem Verbindungsweg (22) des Warmwasser-Ausgabeausgangs (17) oder mit dem Verbindungsweg (23) des Warmwasserausgangs (16) aufweist.

3. Vorrichtung nach Anspruch 1 oder 2,
**dadurch gekennzeichnet,**
**dass** der bewegliche Teil (19) durch einen Hebel (35) zur Drehung betätigt wird.

4. Vorrichtung nach einem der Ansprüche 1 bis 3,
**dadurch gekennzeichnet,**
**dass** die Hydraulikpumpe (12) mit der hydraulischen Antriebschaltung (10) und mit dem Warmwasser-Verteilerkreis (9) in Verbindung steht.

5. Vorrichtung nach einem der Ansprüche 1 bis 4,
**dadurch gekennzeichnet,**
**dass** der Warmwasser-Verteilerkreis (9) und die hydraulische Antriebschaltung (10) von einer gleichen Wasserquelle (15) gespeist werden.

6. Vorrichtung nach einem der Ansprüche 2 bis 4 in Verbindung mit Anspruch 5,
**dadurch gekennzeichnet,**
**dass** der Entleerungskreis (27) des Zylinders (4) mit der Wasserquelle (15) verbunden ist.

7. Vorrichtung nach einem der Ansprüche 1 bis 6,
**dadurch gekennzeichnet,**
**dass** der Warmwasser-Verteilerkreis (9) einen Heizkessel (11) aufweist, der mit einem Einspritzkreis in der Aufgusskammer (1) verbunden ist, wobei der Einspritzkreis eine Klappe (37) aufweist, die auf einen vorbestimmten Druck geeicht ist.
